# EUROPÄISCHE PATENTANMELDUNG

(11) **EP 1 090 782 A2**
(43) Veröffentlichungstag der Anmeldung: **11.04.2001**
(21) Anmeldenummer: 00119819.1
(22) Anmeldetag: 12.09.2000
(51) Int. Cl.: B60D 1/54

(54) **Anhängerkupplung für Kraftfahrzeuge**

(30) Priorität: 04.10.1999 DE 19947653
(71) Anmelder: PEKA-Fahrzeugbau GmbH & Co. KG, 76185 Karlsruhe (DE)
(72) Erfinder: Rimmelspacher, Bernhard, 76287 Rheinstetten (DE)
(74) Vertreter: Schuster, Gregor, Dipl.-Ing.

(57) **Zusammenfassung**

Es wird eine Anhängerkupplung für Kraftfahrzeuge, insbesondere Personenkraftwagen vorgeschlagen, bei der in der Betriebsstellung die Kugelstange (3) form- und kraftschlüssig in einer Bohrung (2) des Kupplungsgehäuses (1) geführt ist, um dann für die Ruhestellung weitgehend aus dem Kupplungsgehäuse (1) herausziehbar und über ein Gelenk (5) wegkippbar bzw. schwenkbar ist.

## Beschreibung

### Stand der Technik

Die Erfindung geht aus von einer Anhängerkupplung für Kraftfahrzeuge, insbesondere Personenkraftwagen, nach der Gattung des Hauptanspruch. Bei einer bekannten Anhängerkupplung der gattungsgemäßen Art (DE GBM 295 20 254) ist die Kugelstange innerhalb einer Bohrung des Kupplungsgehäuses in Fahrtrichtung axial verschiebbar, wobei über eine Führung eines an der Kugelstange quer zur Verschieberichtung angeordneten Stiftes in einer in der Bohrung vorhandenen und um 90° gewendeten Nut die Kupplungskugel der Kugelstange in der für die Ruhestellung in das Kupplungsgehäuse hineingeschobenen Kugelstange zur Seite hin weist, während hingegen in der Betriebsstellung, bei der die Kugelstange weitestmöglich aus dem Kupplungsgehäuse hinausgezogen ist, die Kupplungskugel in der erforderlichen Weise nach oben weist. Nachteilig hierbei ist, daß einerseits gerade dann, wenn die Höchstbelastung, nämlich in Betriebsstellung, stattfindet, der Formschluß zwischen Kugelstange und Kupplungsgehäuse am geringsten ist und daß andererseits die Kupplungskugel trotz in Ruhelage verkürzter Kugelstange in Fahrtrichtung nach außen ragt.

Bekanntlich sind derartige über die Fahrzeugkarosserie herausragende Teile, wie Anhängerkupplungen, nicht nur optisch nachteilig, sondern stören auch beim Einparken von Fahrzeugen. Da derartige Anhängerkupplungen bei Personenkraftwagen meist nur sporadisch benutzt werden, sind in der Praxis vom Fahrzeug abnehmbare Anhängerkupplungen entwickelt worden (DE PS 35 41 904, DE OS 37 18 552). Abgesehen davon, daß derartige abnehmbare Kupplungen sehr viel teurer als starre Kupplungen sind, müssen sie erforderlichenfalls zur Verfügung stehen, d.h. der abnehmbare Teil muß im Fahrzeug mittransportiert werden um erforderlichenfalls zur Verfügung zu stehen. Angestrebt sind somit Anhängerkupplungen, die mit dem Fahrzeug verbunden bleiben, jedoch so verschiebbar sind, daß oben genannte Nachteile des Stands der Technik vermieden werden.

### Die Erfindung und ihre Vorteile

Die erfindungsgemäße Anhängerkupplung mit den kennzeichnenden Merkmalen des Hauptanspruchs hat demgegenüber den Vorteil, daß ein außerordentlich günstiger Kraft- und Formschluß in der Betriebsstellung der Anhängerkupplung besteht, daß aber in der Ruhestellung die störenden Teile, wie Kupplungskugel und Kugelstange, wie bei einer abnehmbaren Anhängerkupplung, nicht mehr störend sind. Ein weiterer Vorteil besteht darin, daß verhältnismäßig wenig Teile zur Erzielung dieser Vorteile erforderlich sind, wobei das Gelenk lediglich zur Wegkippung der ausgeschobenen Kugelstange in die Ruhestellung dient und keine Arbeitsfunktion in der hoch belasteten Betriebsstellung hat. Durch die Verriegelungsvorrichtung wird die Kugelstange in der Betriebsstellung gehalten und kann erst nach lösen derselben in die Ruhestellung verstellt werden.

Nach einer vorteilhaften Ausgestaltung der Erfindung weist die Führung eine Verdrehsicherung auf, welche im Restabschnitt der Kugelstange aufgehoben ist. Hierdurch wird erreicht, daß die Kugelstange, solange sie herausgeschoben wird, meist vertikal nach unten nicht verdrehbar ist, sondern erst, wenn nach Austreten des Gelenkes aus der Führung eine Verdrehung ermöglicht ist, so daß nach einer weiteren vorteilhaften Ausgestaltung der Erfindung die Kugelstange nach dem Verkippen zusätzlich um die Achse der Führung beispielsweise unter die Karosserie verschwenkbar ist.

Nach einer weiteren vorteilhaften Ausgestaltung der Erfindung ist die Betriebsstellung durch einen zwischen Kupplungsgehäuse und Kugelstange wirkenden Anschlag bestimmt. Als Anschlag kann z.B. ein quer durch die Kugelstange verlaufender Bolzen dienen, dessen herausragende Enden mit der ihm zugewandten Stirnseite des Kupplungsgehäuses zusammenwirken, wofür in dieser Stirnseite zur Positionsbestimmung Einwölbungen vorhanden sein können.

Nach einer weiteren vorteilhaften Ausgestaltung der Erfindung ist das Gelenk als Drehgelenk ausgebildet mit einer quer zur Kugelstange verlaufenden Drehachse. Hierdurch ist auch die Kipprichtung des aus dem Kupplungsgehäuse herausgeschobenen Teiles der Kugelstange bestimmt.

Nach einer dazu alternativen Ausgestaltung der Erfindung ist das Gelenk als Kugelgelenk ausgebildet. Damit ist die Kippbewegung nicht eingeschränkt, sondern kann prinzipiell in jede Richtung erfolgen.

Nach einer weiteren vorteilhaften Ausgestaltung der Erfindung ist die Führung als Bohrung im Kupplungsgehäuse ausgebildet und weist einen Abschlußring auf mit nach innen ragenden Führungsabschnitten, welche beim Verschieben in entsprechende Nuten oder Abflachungen der Kugelstange kämmen, welche im Restabschnitt zur Nutbegrenzung in eine Ringnut übergehen. Hierdurch kann die Kugelstange bis an diesen, aus Abschlußring und Führungsabschnitten gebildeten, Anschlag gezogen werden, um dann nach Abkippen des herausragenden Abschnitts der Kugelstange diese so zu verschwenken, daß sie nicht mehr störend ist.

Nach einer diesbezüglichen weiteren vorteilhaften Ausgestaltung der Erfindung ist die Kugelstange in ihrer Ruhelage durch eine Haltevorrichtung positioniert. Hierbei kann es sich um eine einfache Schnappverbindung handeln, in die die Kugelstange beim Verschwenken hineingeschnappt wird.

Nach einer weiteren vorteilhaften Ausgestaltung der Erfindung ist die Kugelstange für ihre Verschiebung mittels eines Elektromotors fremdantreibbar. Der Antrieb selbst kann über den gesamten axialen Hub erfolgen oder bloß gegen Ende der Verschiebung in die Betriebsstellung, wodurch die Kugelstange auch in dieser Position gehalten werden kann.

Nach einer weiteren diesbezüglichen vorteilhaften Ausgestaltung der Erfindung dient für den Antrieb eine Gewindespindel, die mindestens mittelbar auf die der Kupplungskugel abgewandten Seite der Kugelstange an dieser angreift. Die Gewindespindel kann über Zahnräder angetrieben werden, die wiederum vom Elektromotor angetrieben werden. Die Verriegelung und/oder der Antrieb der Kugelstange kann erfindungsgemäß auch mit einfachen Mitteln erfolgen, wie beispielsweise einem mit der Kugelstange zusammenwirkenden Querbolzen des Kupplungsgehäuses, der leicht ein- und ausriegelbar ist, nach entsprechender manueller Verstellung derselben.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und im folgenden näher beschrieben. Es zeigen:
- Figur 1: Eine Anhängerkupplung in der Seitenansicht und im Teilschnitt
- Figur 2: eine Ansicht und ein Teilschnitt der Anhängerkupplung, um gegenüber Figur 1 90° verdreht und
- Figur 3 bis Figur 6: verschiedene Stellungen der Anhängerkupplung zwischen Betriebsstellung und Ruhestellung.

### Beschreibung des Ausführungsbeispiels

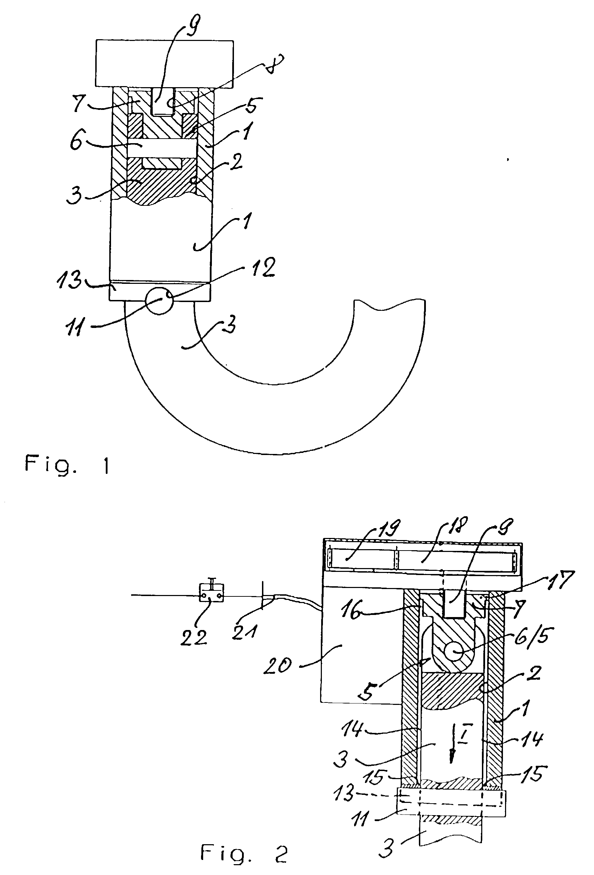

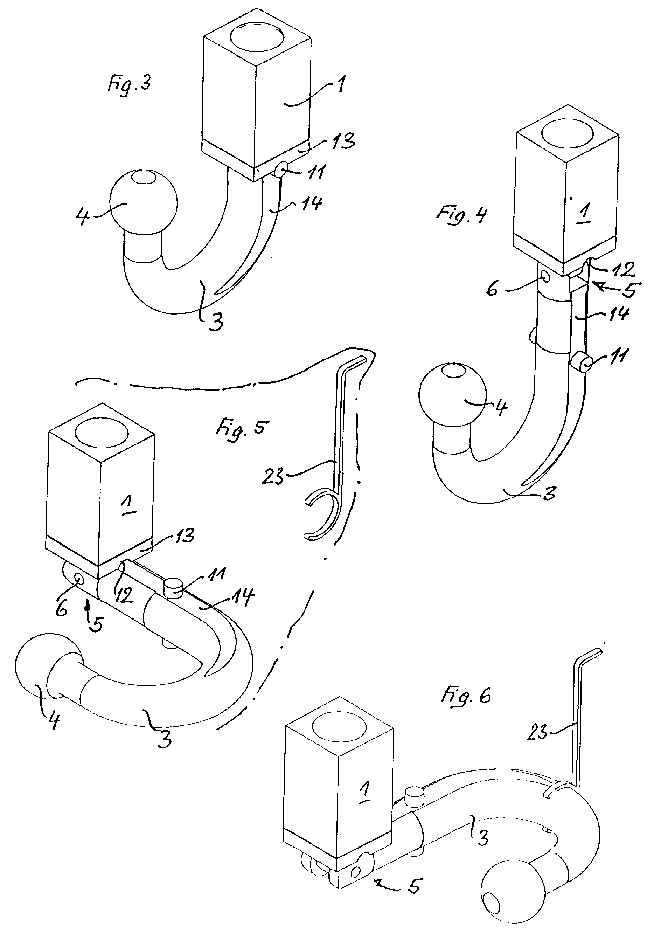

In Figur 1 ist eine erfindungsgemäße Anhängerkupplung für einen PKW in der Seitenansicht sowie im Teilschnitt dargestellt, bei der in einem Kupplungsgehäuse 1 in einer zentralen Längsbohrung 2 eine Kugelstange 3 axial verschiebbar geführt ist. Am freien Ende der außerhalb des Kupplungsgehäuses 1 gekrümmten Kugelstange 3 ist, wie in den Figuren 3 bis 6, dargestellt, eine Kupplungskugel 4 angeordnet. An dem der Kupplungskugel 4 abgewandten, in der Längsbohrung 2 geführten Endabschnitt der Kugelstange 3 ist ein Drehgelenk 5 vorgesehen mit einer Drehachse 6, mittels der die Kugelstange, sobald sie die in Figur 4 dargestellte aus dem Kupplungsgehäuse 1 herausgeschobene Stellung einnimmt, um 90° kippbar ist, wobei ein Restabschnitt 7 innerhalb des Kupplungsgehäuses 1 verbleibt. In diesem Restabschnitt ist stirnseitig eine Gewindebohrung 8 vorgesehen, in die eine Gewindespindel 9 zum axialen Antrieb der Kugelstange 3, aber auch zu deren Halterung in der gezeigten Betriebsstellung greift. Diese Betriebsstellung ist zudem durch einen Querbolzen 11 fixiert, der unterhalb des Kupplungsgehäuses 1 die Kugelstange 3 durchquert und in dieser Stellung an einer Mulde 12 anschlägt, die stirnseitig in einem Deckel 13 des Kupplungsgehäuses 1 vorgesehen ist. In der gezeigten Betriebsstellung besteht somit ein spielfreier Formschluß zwischen der Kugelstange 3 und der Längsbohrung 2 des Kupplungsgehäuses 1, zwischen dem Querbolzen 11 und der Mulde 12 des Deckels 13, sowie der Gewindespindel 9 in der Gewindebohrung 8 des Restabschnitte 7 und nicht zuletzt zwischen dem Restabschnitt 7 und der Kugelstange 3 über die Drehachse 6.

In Figur 2 ist das Kupplungsgehäuse 1 ebenfalls im Längsschnitt gezeigt, jedoch um 90° verdreht. Zur Verdrehführung weist die Kugelstange 3 Abflachungen 14 auf, die mit auf der Innenseite des Deckels 13 angeordneten Führungsabschnitten 15 zusammenwirken. Am Restabschnitt 7 der Kugelstange 3 ist eine Abdrehung 16 vorhanden, deren Durchmesser dem Nettoabstand zwischen den Abflachungen 14 entspricht, so daß bei der Führung die Verdrehsicherung 14, 15 nur so lange wirkt, bis bei Verschieben der Kugelstange 3 in Richtung I die Abdrehung 16 in den Deckel 13 taucht. Hiernach ist das Drehgelenk 5 vollständig aus der Längsbohrung 2 des Kupplungsgehäuses 1 aufgetaucht, während der Restabschnitt 7 aufgrund des durch die Abdrehung 16 gebildeten Bundes 17 als Hubanschlag mit dem Deckel 13 bzw. den Führungsabschnitten 15 zusammenwirkt. Diese Stellung ist in Figur 4 gezeigt. Danach kann, wie in Figur 5 gezeigt, die Kugelstange 3 um die Achse 6 des Gelenkes 5 um 90° verschwenkt werden, um dann durch Wegfall der Verdrehführung 14, 15, wie in Figur 6 gezeigt, nach hinten geschwenkt zu werden. Wie in Figur 2 gezeigt, ist die Gewindespindel 9 mit einem Zahnrad 18 verbunden, welches wiederum mit einem Zahnrad 19 kämmt, das von einem Elektromotor 20 antreibbar ist, der mit dem Kupplungsgehäuse 1 verbunden ist. Der Elektromotor 20 wird über ein Kabel 21 mit Strom versorgt, der über einen Schalter 22 gesteuert ist. Bei dem ausgeführten Beispiel hat die Gewindespindel 9 nur die Funktion, die Kugelstange 3 in die gezeigt Position zu ziehen und dort in dieser Betriebsstellung zu verriegeln bzw. bei außer Betrieb setzen der Anhängerkupplung die Kugelstange 3 zu lösen, so daß diese nach unten entsprechend dem Pfeil I herausschiebbar ist, um danach gekippt und geschwenkt werden zu können. Natürlich ist auch denkbar, daß bei einer etwas anderen Gestaltung des Getriebes 9, 18, 19 der vollständige Hub der Kugelstange 3 durch eine Spindel odgl. vollautomatisch vorgenommen wird.

In den Figuren 3 bis 6 ist der erfindungsgemäße Verstellvorgang der Anhängerkupplung anhand von 4 Stellungen erläutert. In Figur 3 nimmt die Kugelstange 3 die Betriebsstellung ein, in der die Kupplungskugel 4 nach oben ragt und in der der Querbolzen 11 formschlüssig am Deckel 13 anliegt. Die Abflachung 14 dient als Verdrehsicherung.

In Figur 4 ist die Kugelstange 3 in einer nach unten weitestmöglich aus dem Kupplungsgehäuse 1 herausgezogenen Stellung gezeigt entsprechend dem Abstand des Querbolzens 11 zur Mulde 12.

In Figur 5 ist die Kugelstange 3, um 90° verdreht um die Drehachse 6, gekippt gezeigt, wobei der Querbolzen 11 eine vertikale Stellung einnimmt. Außerdem ist in Figur 5 eine Haltevorrichtung 23 gezeigt, die wie das Kupplungsgehäuse 1 an der Karosserie des Kraftfahrzeuges befestigt ist.

In Figur 6 ist die Ruhestellung der Anhängerkupplung gezeigt, in der, ausgehend von der Stellung aus Figur 5 die Kugelstange 3 nach hinten geschwenkt ist und in der Haltevorrichtung 23 eingeschnappt ist. Um von der Ruhestellung aus Figur 6 in die Betriebsstellung aus Figur 3 zu gelangen, sind somit nur wenige Handgriffe erforderlich, nämlich Verschwenken entsprechend Figur 5, Zurückkippen entsprechend Figur 6 und Einschieben entsprechend Figur 3.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Kupplungsgehäuse
- 2: Längsbohrung
- 3: Kugelstange
- 4: Kupplungskugel
- 5: Drehgelenk
- 6: Drehachse
- 7: Restabschnitt
- 8: Gewindebohrung
- 9: Gewindespindel
- 10:
- 11: Querbolzen
- 12: Mulde
- 13: Deckel
- 14: Abflachung
- 15: Führungsabschnitt
- 16: Abdrehung
- 17: Bund
- 18: Zahnrad
- 19: Zahnrad
- 20: Elektromotor
- 21: Kabel
- 22: Schalter
- 23: Haltevorrichtung

## Patentansprüche

1. Anhängerkupplung für Kraftfahrzeuge, insbesondere Personenkraftwagen
- mit einem mindestens mittelbar an der Fahrzeugkarrosserie befestigen Kupplungsgehäuse (1),
- mit einer endseitig eine Kupplungskugel (4) aufweisenden, im Kupplungsgehäuse (1) zwischen einer Ruhestellung und einer Betriebsstellung verstellbar angeordneten Kugelstange (3),
- mit einer formschlüssigen Führung (2, 14, 15) im Kupplungsgehäuse (1) für eine axiale Verschiebung der Kugelstange (3) und
- mit einer Verriegelungsvorrichtung (8, 9) der Kugelstange (3) mindestens in Betriebsstellung,
dadurch gekennzeichnet,
- daß die Kugelstange (3) ein Gelenk (5) aufweist,
- daß dieses Gelenk (5) innerhalb der Führung (2) des Kupplungsgehäuses (1) angeordnet ist, - daß in Betriebsstellung die Kugelstange (3) einschließlich Gelenk (5) in das Kupplungsgehäuse (1) eingeschoben ist,
- daß die Kugelstange (3) bis auf einen Restabschnitt (7) aber einschließlich Gelenk (5) aus der Führung (14, 15) bei der Verstellung in die Ruhelage herausschiebbar ist und
- daß der herausgeschobene Teil der Kugelstange (3), um das Gelenk (5) quer zur Verschiebeachse I kippbar ist.

2. Anhängerkupplung nach Anspruch 1, dadurch gekennzeichnet, daß die Führung (14, 15) eine Verdrehsicherung aufweist, welche im Restabschnitt (7) aufgehoben ist.

3. Anhängerkupplung nach Anspruch 2, dadurch gekennzeichnet, daß die Kugelstange (3) nach dem Verkippen zusätzlich um die Verschiebeachse I verschwenkbar ist.

4. Anhängerkupplung nach einem der vorhergehenden Ansprüche, dadurch gekennzeichnet, daß die Betriebsstellung durch einen zwischen Kupplungsgehäuse (1) und Kugelstange (3) wirkenden Anschlag (11, 12, 13) bestimmt ist.

5. Anhängerkupplung nach einem der vorhergehenden Ansprüche, dadurch gekennzeichnet, daß das Gelenk (5) als Drehgelenk ausgebildet ist mit einer quer zur Kugelstange (3) verlaufenden Drehachse (6).

6. Anhängerkupplung nach einem der vorhergehenden Ansprüche, dadurch gekennzeichnet, daß das Gelenk (5) als Kugelgelenk ausgebildet ist .

7. Anhängerkupplung nach einem der vorhergehenden Ansprüche, dadurch gekennzeichnet, daß die Führung aus einer im Kupplungsgehäuse (1) vorhandene Längsbohrung (2), einem Abschlußring (Deckel 13) mit nach innen ragenden Führungsabschnitten (15) und auf der Mantelfläche mit den Führungsabschnitten korrespondierenden Abflachungen (14) oder Längsnuten besteht, wobei die korrespondierenden Führungsabschnitte (15) in den Abflachungen (14) bzw. Nuten kämmen und wobei diese Abflachungen (14) bzw. Nuten im Restabschnitt (7) zur Hubbegrenzung und Aufhebung der Verdrehsicherung in eine Abdrehung (16) übergehen.

8. Anhängerkupplung nach einem der vorhergehenden Ansprüche, dadurch gekennzeichnet, daß die Kugelstange (3) in ihrer Ruhelage durch eine Haltevorrichtung (23) gestützt wird.

9. Anhängerkupplung nach einem der vorhergehenden Ansprüche, dadurch gekennzeichnet, daß die Kugelstange (3) für ihre Verschiebung fremdantreibbar ist.

10. Anhängerkupplung nach Anspruch (7), dadurch gekennzeichnet, daß zum Fremdantrieb ein Elektromotor dient.

11. Anhängerkupplung nach Anspruch (8) oder (9), dadurch gekennzeichnet, daß für den Fremdantrieb eine Gewindespindel (9) dient, die mindestens mittelbar mit der Kugelstange (3) zusammenwirkt.
